# EUROPEAN PATENT APPLICATION

(11) **EP 0 541 218 A2**
(43) Date of publication of application: **12.05.1993**
(21) Application number: 92308081.6
(22) Date of filing: 07.09.1992
(51) Int. Cl.: G01N 22/04, G01N 22/00

(54) **Microwave drainage meter**

(30) Priority: 12.10.1991 GB 9121678
(71) Applicant: UNAFORM LTD., Bury, Lancashire BL0 0NT (GB)
(72) Inventor: Dean, Brian, Colne, Lancashire BB8 7AU (GB)
(74) Representative: Quest, Barry

(57) **Abstract**

Moisture content of a fibre/water stock on a drainage fabric of a paper making machine is measured with a moisture meter beneath the fabric. Energy is directed through the fabric and stock and the meter monitors the modification of the energy caused by the moisture content of the stock. Microwave energy is used, and the meter may have a head (1) with three microwave cavities: a fixed frequency reference cavity (3), an upwardly open variable frequency cavity (5), and a mixer cavity (4). The mixer cavity (4) produces an output, which can be presented on a digital display, which is determined by the difference between the fixed frequency and the frequency of the open cavity (5).

## Description

This invention relates to a moisture meter particularly for use in the forming section, or 'wet end' of a Fourdrinier or other paper making machine.

At the wet end of a Fourdrinier machine a water/fibre stock is applied to the surface of a moving drainage fabric at an upstream end of a forming section of the machine. Water is removed and a drained fibre layer is delivered, for further processing and drying, at a downstream end of the section.

It is desirable to be able to monitor the drainage efficiency along the forming section and for this purpose it is known to use an ultrasonic meter. An ultrasonic transducer is placed at different positions under the drainage fabric and a pulse of ultrasonic energy is reflected from the stock/air interface on top of the fabric. In this way information as to the thickness of the stock, and hence the degree of drainage, can be obtained along the forming section.

However, since the ultrasonic meter measures distance to the stock/air interface, there will be variations in the measurements which are not caused by changes in moisture content, e.g. due to disturbances in the surface, or due to air entrainment, and in practice it is necessary to make allowance for these variations which can be difficult or inconvenient.

An object of the present invention is to provide a moisture drainage meter which can be used to measure moisture content effectively and in a simple and convenient manner.

According to one aspect of the present invention therefore there is provided a method of measuring moisture content of a fibre/water stock supported on a drainage fabric of a paper making machine wherein a moisture meter is disposed beneath the fabric, energy is directed through the fabric and the stock by the meter, and modification of the energy caused by the moisture content of the stock is monitored by the meter, characterised in that the said energy comprises microwave energy.

With this arrangement moisture content can be measured substantially without having to make complicated or inconvenient allowance for variations in other parameters.

According to a second aspect of the present invention there is provided apparatus for use in performing the above mentioned method, said apparatus comprising: a meter head for disposition beneath a drainage fabric; three microwave cavities provided in the head, a first said cavity being a fixed frequency reference cavity, a second said cavity being open upwardly so as to be arranged to be of variable frequency in dependence on the dielectric constant of the material above same, and the third said cavity being a mixer cavity arranged to provide an output depending on the difference between the frequencies of the first and second cavities; and an indicator device operable to produce an indication of said output.

The head is preferably of a form suited to convenient manual insertion beneath the drainage fabric and thus for example may comprise a plastics block, e.g. a high density polythene block, which may be on the end of a rod or wand e.g. made from stainless steel.

The meter may use microwave energy at approximately 11GHz.

The said mixer cavity may be arranged between the other two cavities and may contain a microwave mixer diode. The said other two cavities may contain Gunn-effect devices.

The Gunn-effect device in the fixed frequency cavity may be coupled to the mixer diode by means of a coupling iris. The Gunn-effect device in the open cavity may also be coupled to the mixer diode by a coupling iris.

The output of the mixer diode may be a d.c. output and the said indicator device may be arranged to amplify, digitize and present this output to a display unit in any suitable manner.

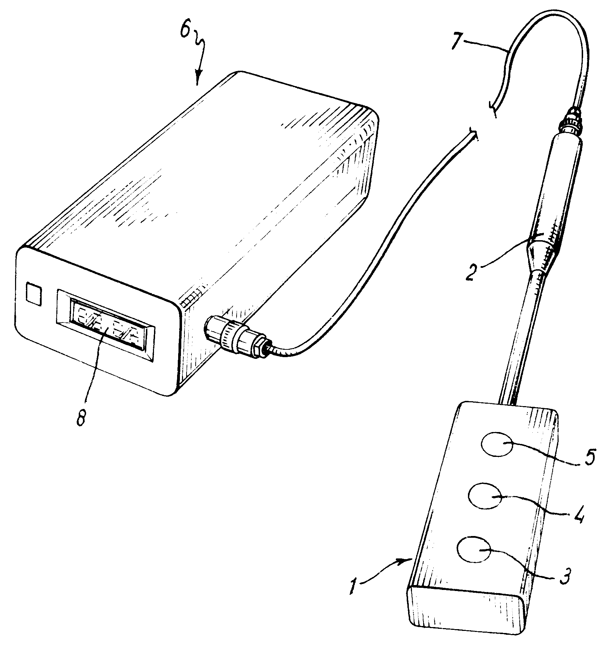

The invention will now be described further by way of example only and with reference to the accompanying drawing which is a diagrammatic view of one form of a moisture meter according to the invention.

The moisture meter is for use in measuring moisture content of fibre/water stock on a drainage fabric at the forming section of a Fourdrinier paper-making machine.

The meter comprises a block 1 of high density polyethylene mounted on the end of a stainless steel rod or wand 2.

The block 1 contains three microwave cavities 3, 4, 5 operating at a frequency of approximately 11GHz.

The cavities 3, 4, 5 are arranged side-by-side. The central cavity 4 is a mixer cavity fitted with a microwave mixer diode. The other two cavities 3, 5 have Gunn-effect devices. Of the two latter cavities, one 3 is of fixed frequency and is coupled to the central mixer diode cavity by means of a coupling iris, the other cavity 5 is open to microwave energy on its uppermost short side which removes a cavity boundary condition and allows the group frequency of the cavity 5 to vary. This frequency variation is dependent on the re-introduction of the missing boundary by dielectric material positioned over the open cavity. Thus, the boundary forms the effective measuring area of the meter. The open cavity 5 is coupled to the mixer cavity 4 via a coupling iris.

The mixer diode and the Gunn-effect devices are connected to control and indicator circuitry in a main meter housing 6 arranged remote from the block 1 and wand 2 and linked thereto by a cable 7. The housing 6 incorporates a digital display 8.

In use, the block 1 is inserted beneath the drainage fabric using the rod or wand 2 to ensure that the block 1 is at a known location relative to the edge of the fabric.

Microwave energy is generated in the cavities 3, 4, 5. The fixed frequency cavity 3 produces a reference frequency. The open cavity 5 produces a group frequency which varies proportionally to the dielectric constant of the material above the open cavity.

The dielectric constant of water is high (75) and that of paper is low (approximately 4). Accordingly, if paper pulp is positioned near the measuring area the effect of the paper content of the stock on the fabric would be negligible whereas that of the water content would be significant. Thus, by monitoring the group frequency of the open cavity 5, the water content of the stock can be ascertained.

The mixer diode contains two inputs, one from the fixed frequency or reference cavity 3 and the other from the open boundary or measuring cavity 5. The mixer diode produces a d.c. output proportional to the difference between the input. Therefore, as the measuring cavity group frequency varies with moisture content, the d.c. output from the mixer diode also varies and is proportional to the moisture content.

The d.c. output is amplified, digitized and displayed as a digital representation of moisture content on the display 8.

With this arrangement, moisture content can be monitored effectively in a particularly simple and convenient manner.

It is of course to be understood that the invention is not intended to be restricted to the details of the above embodiment which are described by way of example only. Thus, although the meter is described in relation to use with a Fourdrinier machine it is to be understood that the invention is not restricted to this field of application and the meter can be used with other paper making machines.

## Claims

1. A method of measuring moisture content of a fibre/water stock supported on a drainage fabric of a paper making machine wherein a moisture meter is disposed beneath the fabric, energy is directed through the fabric and the stock by the meter, and modification of the energy caused by the moisture content of the stock is monitored by the meter, characterised in that the said energy comprises microwave energy.

2. Apparatus for use in performing the method of claim 1, said apparatus comprising a meter head (1) for disposition beneath a drainage fabric; three microwave cavities (3, 4, 5) provided in the head, a first said cavity (3) being a fixed frequency reference cavity, a second said cavity (5) being open upwardly so as to be arranged to be of variable frequency in dependence on the dielectric constant of the material above same, and the third said cavity (4) being a mixer cavity arranged to provide an output depending on the difference between the frequencies of the first and second cavities (3, 5); and an indicator device (6) operable to produce an indication of said output.

3. Apparatus according to claim 2 wherein the head (1) comprises a block (1) containing the cavities (3, 4, 5) on the end of a rod or wand (2).

4. Apparatus according to claim 3 wherein the block (1) is formed from a plastics material and the rod or wand (2) is formed from stainless steel.

5. Apparatus according to any one of claims 2 to 4 which uses microwave energy at approximately 11GHz.

6. Apparatus according to any one of claims 2 to 5 wherein the mixer cavity (4) is arranged between the other two cavities (3, 5).

7. Apparatus according to claim 6 wherein the mixer cavity contains a microwave mixer diode.

8. Apparatus according to claim 6 or 7 wherein the said other two cavities (3, 5) contain Gunn-effect devices.

9. Apparatus according to claims 7 and 8 wherein the Gunn-effect device in the fixed frequency cavity (3) is coupled to the mixer diode in the mixer cavity (4) by means of a coupling iris.

10. Apparatus according to claim 9 wherein the Gunn-effect device in the open cavity (5) is also coupled to the mixer diode in the mixer cavity (4) by means of a coupling iris.
